# EUROPÄISCHE PATENTSCHRIFT

(11) **EP 0 804 987 B1**
(45) Veröffentlichungstag und Bekanntmachung des Hinweises auf die Patenterteilung: **30.10.2002**
(21) Anmeldenummer: 97105587.6
(22) Anmeldetag: 04.04.1997
(51) Int. Cl.: B23D 19/06, B26D 1/24, B26D 7/26

(54) **Halterung für Rundmesserpaar**
Mounting for a circular knife pair
Support pour une paire de couteau circulaire

(30) Priorität: 03.05.1996 DE 19617713
(43) Veröffentlichungstag der Anmeldung: 05.11.1997
(73) Patentinhaber: SIG Cantec GmbH & Co. KG, 45143 Essen (DE)
(72) Erfinder: Rötz, Steffen Dr. Ing, 45359 Essen (DE); Lentz, Norbert Dr. Ing., 45259 Essen (DE); Kolodzey, Thomas, 46244 Bottrop-Kirchhellen (DE); Kania, Hubert, 44627 Herne (DE)
(74) Vertreter: Vomberg, Friedhelm, Dipl.-Phys.

(56) Entgegenhaltungen:
- EP-A- 0 058 629
- EP-A- 0 569 767
- EP-A- 0 737 552

## Beschreibung

### Beschreibung für folgenden Vertragsstaat: DE, FR, GB, NL

Die Erfindung betrifft eine Messerhalterung für ein Rundmesserpaar mit einem auf Führungsschienen längsverschiebbaren Gestell mit einem oberen Teil und einem unteren Teil zur separaten Lagerung je eines Messers, wobei durch die einander zugeordneten Schneidkanten der Rundmesser eine Schneidebene gegeben ist, jedes Rundmesser auf einer in einer Ausnehmung des Gestelles feststellbar gehaltenen Achse abgestützt ist, wobei die Schneidebene jedes der Drehlager durchdringt und die Rotationsachse des Drehlagers gegenüber der Rotationsachse des im Gestell gehaltenen Teiles der Achse eine Exzentrizität aufweist.

Eine solche Messerhalterung ist auch der EP 0 737 552 A1 bekannt, welche einen Stand der Technik gemäß Art. 54(3) EPÜ betrifft. Hierbei ist eines der Messer auf einem Messerträger befestigt, der über ein Rollenlager drehbar in einem Zwischenring abgestützt ist, der wiederum an einem Exzenterring befestigt ist. Durch Betätigung dieses Exzenterringes kann die axiale Lage des Messers bezogen auf die Lage des zweiten Messers verändert werden.

Im übrigen ist es bekannt, daß bei Rundmesserscheren zum Schneiden von Blechtafeln in Streifen und/oder von Streifen in Zuschnitte Rundmesser entweder auf zwei Messerwellen (vgl. z.B. DE 40 05 271 C1) oder paarweise an einzeln verschiebbaren Halterungen (vgl. z.B. WO-A-94/00261) angeordnet werden.

Die vorliegende Erfindung betrifft eine Anordnung der letztgenannten Art mit einem auf Führungsschienen längsverschiebbaren Gestell mit einem oberen und unteren Teil zur separaten Lagerung je eines Rundmessers, wobei durch die einander zugeordneten Schneidkanten eine Schneidebene gegeben ist. In der Praxis weisen die beiden Rundmesser eines Paares einen Schneidspalt auf. Der Begriff Schneidebene ist hier unter Vernachlässigung des Schneidspaltes verwendet worden.

Die aus der WO-A-94/00261 bekannte Messerhalterung weist eine große Vielzahl von Einzelteilen (zentrale Messerwelle, Zentrierstück für Transportring und Rundmesser, zwei Wälzlager, eine Schiebehülse mit Gewinde, geschlitzte Mutter, durch das Gestell durchgeführte Halterung für die Schiebehülse) auf. Rechnet man jedem Einzelteil eine bestimmte Toleranz zu, so kann sich durch die Addition der einzelnen Toleranzen eine erhebliche Abweichung ergeben bzw. umgekehrt: Ist für die Rundmesser eine bestimmte Toleranz vorgeschrieben, so müssen die Einzelteile eine sehr geringe Toleranz aufweisen, was einen hohen Fertigungsaufwand erforderlich macht. Die Rundmesser der bekannten Halterung stützen sich auf einem Teil der Welle ab, der sich außerhalb der Lagerung befindet, wodurch sich eine große Kraglänge ergibt, die zu einer Verkippungsgefahr führt und damit das Schneidergebnis beeinträchtigt. Zur Demontage der Messer muß wegen der Überlappung der Messer zunächst ein Zentrierstück ausgebaut werden, was den Aufwand beim Montieren bzw. Demontieren zusätzlich erhöht.

Der Erfindung liegt die Aufgabe zugrunde, die erforderliche Anzahl der Teile der Messerhalterung zu reduzieren, die Kippsicherheit zu erhöhen und den Aufwand für Fertigung und Montage zu reduzieren.

Diese Aufgabe wird durch das Rundmesser nach Anspruch 1 gelöst.

Eine in einem Gestell feststellbare Achse weist eine hohe Belastbarkeit auf. Wenn die Schneidebene die Drehlager durchdringt, bedeutet dies, daß die Drehlager im Bereich der Krafteinwirkung angeordnet sind und damit die Verkippungsgefahr der Rundmesser verhindert wird. Durch die vorgesehene Exzentrizität des Drehlagers gegenüber den im Gestell befindlichen Teil der Achse ist es durch Verschwenken der Achse in einfacher Weise möglich, die Rundmesser aus dem Bereich der Überlappung herauszuschwenken und zu demontieren.

Vorteilhafte Weiterbildungen der Erfindung sind in den Unteransprüchen beschrieben. So wird durch die Begrenzung des im Gestell befindlichen Teiles der Achse durch einen Absatz oder Flansch in Richtung auf das Drehlager eine genaue axiale Position der Achse und damit des auf ihr gelagerten Messer gewährleistet.

Nach einer bevorzugten Ausführungsform wird die Achse über eine Deckelplatte in die Ausnehmung des Gestelles eingezogen und festgestellt.

Um einen einwandfreien sicheren Betrieb zu gewährleisten, ist weiter vorgesehen, die Deckelplatte sowohl gegen die Achse als auch gegen das Gestell gegen Verdrehen zu sichern. Dabei kann die Drehsicherung der Deckelplatte gegenüber dem Gestell durch eine federbelastete Rasteinrichtung und gegenüber der Achse durch Zentrierstifte erfolgen.

Zur Einstellung des Schneidspaltes zwischen den beiden Rundmessern ist nah einer Weiterentwicklung der Erfindung vorgesehen, zwischen dem Drehlager und dem Gestell eine Federanordnung vorzusehen und die Feststellbarkeit der Achse mit einer axialen Einstellbarkeit zu kombinieren, wobei die axiale Einstellbarkeit bei einer bevorzugten Ausführungsform durch das axiale Maß zwischen einer zentrischen, zur Anlage an die Achse und einer zur Anlage an das Gestellt vorgesehene Anlagefläche der Deckelplatte ermöglicht wird.

Eine besonders gedrungene Bauart der Messerlagerung ergibt sich, wenn die Drehlager unmittelbar durch einen Teil der im Gestell gehaltenen Achse und/oder einen das Rundmesser tragenden Ring gebildet ist. Bei vorgegebenem Messerdurchmesser können die Achse und das Lager groß dimensioniert werden, wodurch sich eine hohe Belastbarkeit und Lebensdauer der Teile ergibt.

Das Rundmesser ist zur Anlage an einem Flansch des Lagerringes befestigt, wobei es durch einen Zentrierabsatz schnell in seine Position gebracht werden kann.

In der Regel ist der Transportring im Betriebseinsatz häufiger zu wechseln als das Rundmesser. Um diesem Umstand Rechnung zu tragen. ist weiter eine separate Demontage der Transportringe und ihre Befestigung durch zusätzliche Befestigungsmittel vorgesehen.

Ein vorteilhafter Einsatz der erfindungsgemäßen Messerhalterung ist insbesondere dann gegeben, wenn das obere und das untere Teil des Gestelles und ein beide Teile in Transportrichtung des zu schneidenden Gutes verbindendes Verbindungsstück im wesentlichen S-förmig angeordnet sind. Ein Verschleiß des eigentlichen Gestelles wird schließlich dadurch verhindert, daß seine der Transportebene des zu schneidenden Gutes zugewandten Flächen mit Verschleißplatten versehen sind.

Ein Ausführungsbeispiel der Erfindung ist in der Zeichnung dargestellt und wird im folgenden näher erläutert. Es zeigen
- Fig. 1: eine Rundmesserhalterung in einer Seitenansicht entgegen der Transportrichtung des zu schneidenden Gutes, insbesondere eines Bleches,
- Fig. 2: die Rundmesserhalterung in einem Längsschnitt durch die Messerachsen,
- Fig. 3: den oberen Teil der Rundmesserhalterung in einem Längsschnitt,
- Fig. 4: die Position der Rundmesser zueinander in einer auszugsweisen Darstellung und
- Fig. 5: den oberen Teil der Messerhalterung in abgewandelter Form in einer teilweise geschnittenen Seitenansicht.

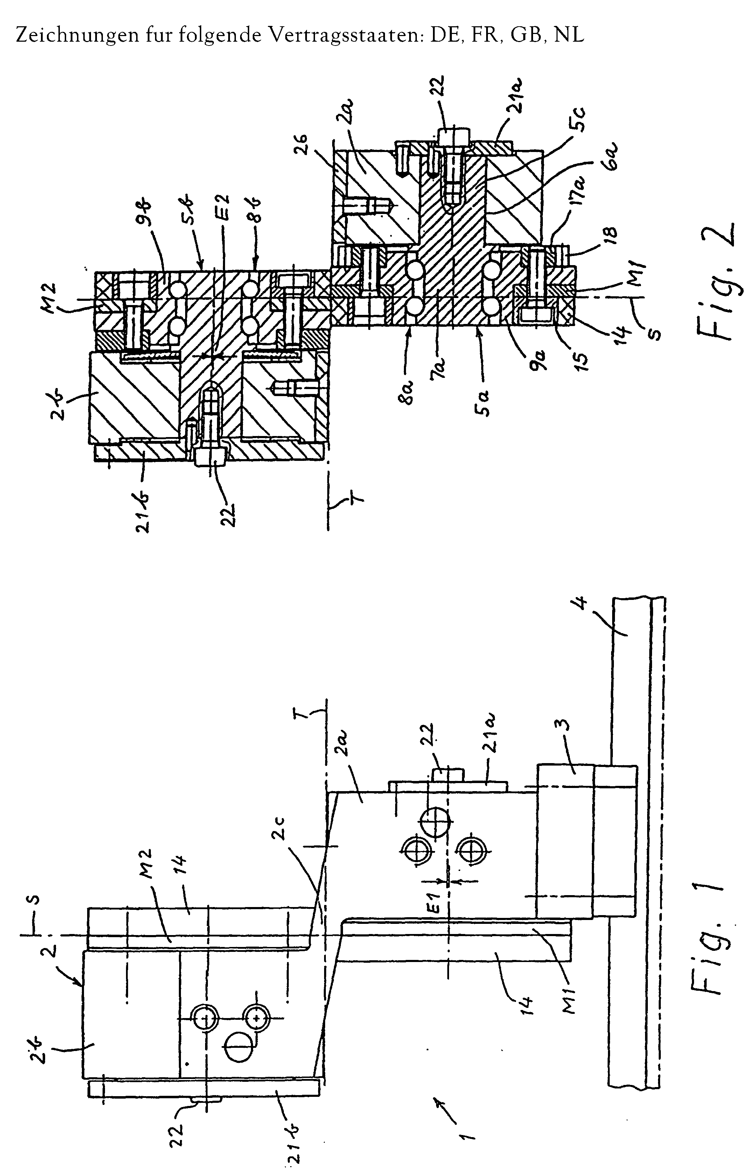

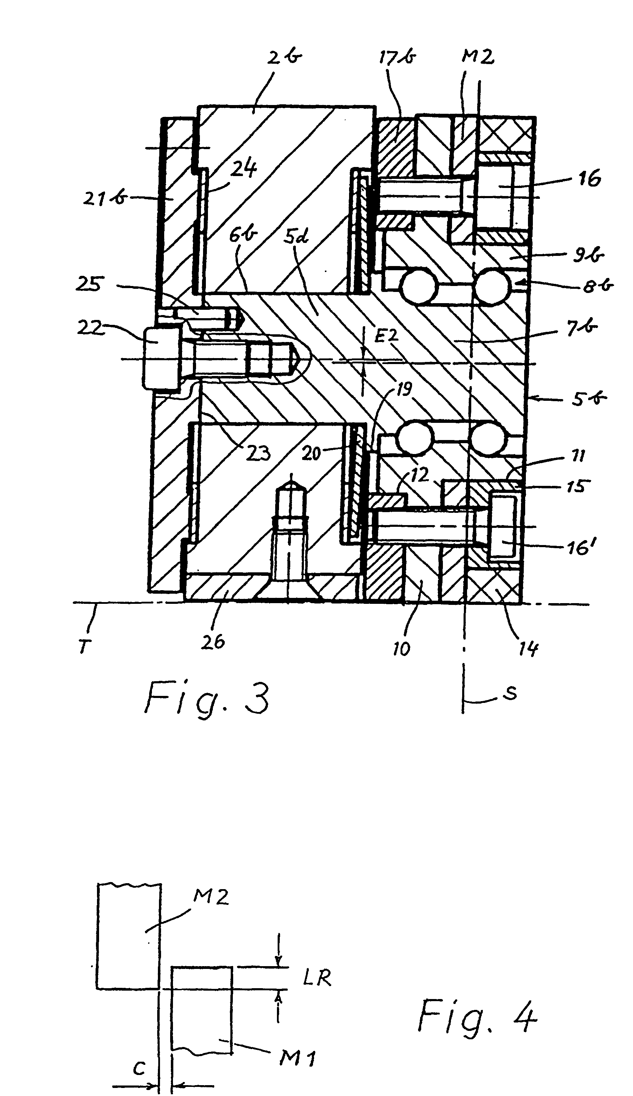

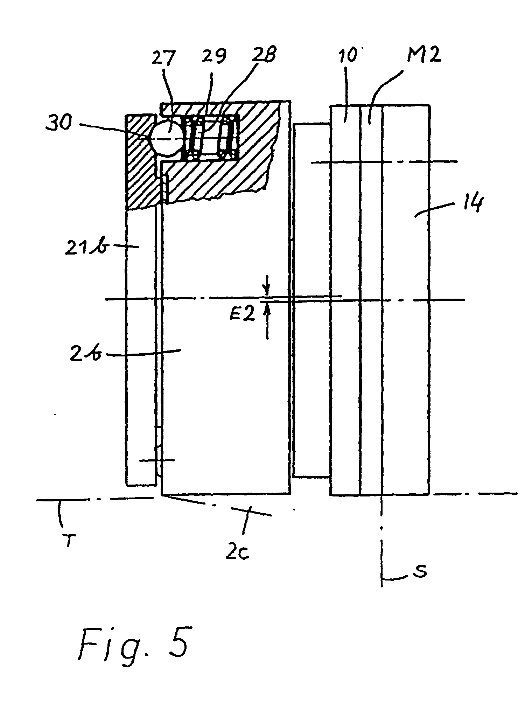

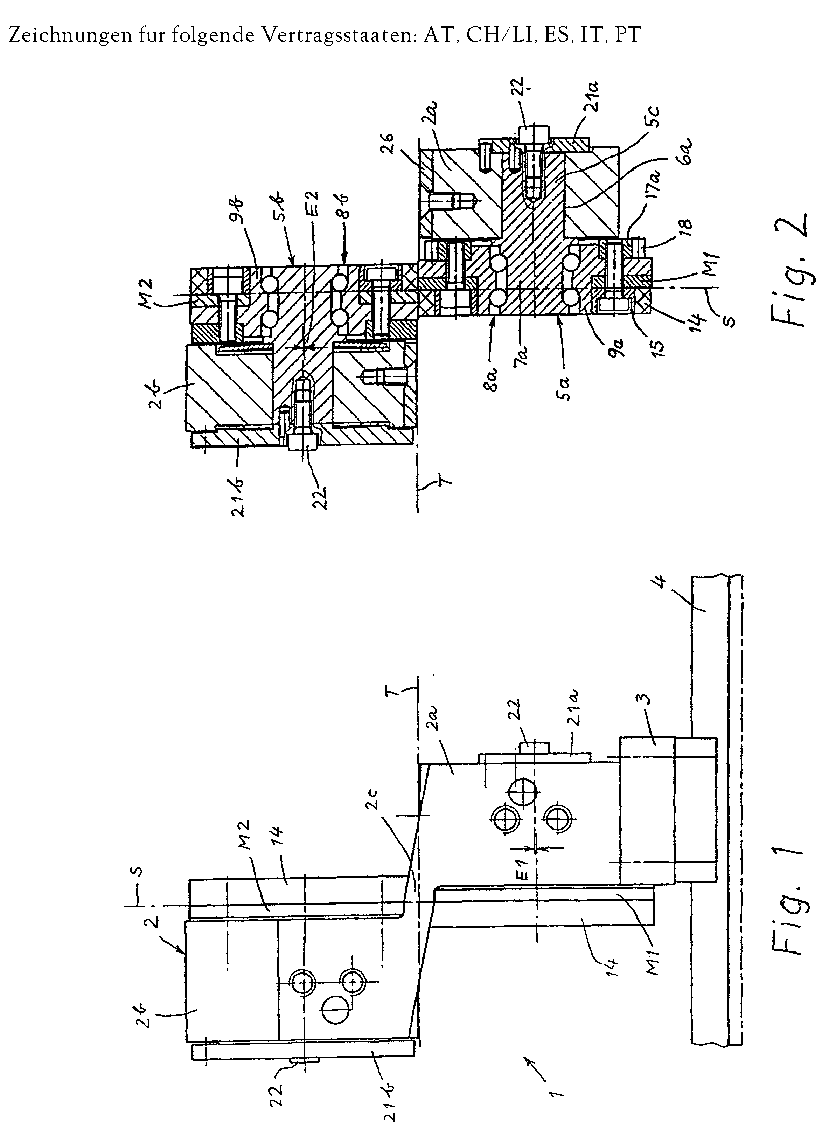

In Fig. 1 ist eine von mehreren auf einer Führungsschienenanordnung längsverschieblichen und festsetzbaren Rundmesserhalterungen 1 in der Seitenansicht dargestellt. Die Halterung 1 weist ein oberes, in etwa S-förmiges Gestell 2 auf, das auf einem Schlitten 3 befestigt ist, der wiederum auf Führungsschienen 4 gleitbar geführt ist.

Im unteren Teil 2a des Gestelles 2 ist ein auch als Ringmesser bezeichnetes ringförmiges Rundmesser M1 an der linken Seite gelagert und im oberen Teil 2b ist ein zweites Rundmesser M2 auf der rechten Seite gelagert, wobei die jeweils von dem anderen Gestellteil 2a bzw. 2b abgewandten Stirnflächen der Rundmesser M1, M2 im wesentlichen in der gleichen Ebene, der Schneidebene S, liegen.

Zur Lagerung der Rundmesser M1, M2 sind zapfenförmige Lagerachsen 5a, 5b vorgesehen, die mit einem ersten Teil 5c bzw. 5d in entsprechende Ausnehmungen 6a, 6b der Gestellteile 2a bzw. 2b eingesetzt sind und - in axialer Richtung gesehen - jeweils auf das andere Gestellteil 2b bzw. 2a hinausragen. Die Lagerachsen 5a, 5b sind an ihren aus dem jeweiligen Gestellteil 2a bzw. 2b hervorstehenden Teil 7a, 7b jeweils als Innenteil eines Wälzlagers 8a, 8b ausgebildet. Dabei weisen die Mittelachse der Wälzlagerteile 7a, 7b und die Rotationsachse der zapfenförmigen Lagerachsteile 5c bzw. 5d zueinander eine Exzentrizität E1 bzw. E2 auf.

Die Lagerachsen 5a, 5b sind in den Ausnehmungen 6a, 6b der Gestellteile 2a, 2b dreh- bzw. schwenkbar gelagert, so daß die Mittel- bzw. Rotationsachse der Wälzlagerteile 7a, 7b - in der Stirnansicht gesehen - gegenüber der Rotationsachse der Lagerachse 5a, 5b nach oben, nach unten, nach rechts, nach links und in alle Zwischenstellungen gebracht werden kann.

Die Wälzlager 8a, 8b weisen jeweils einen äußeren Trag- oder Lagerring 9a bzw. 9b mit einem Flansch 10 auf. Zu beiden Seiten des Flansches 10 ist eine vordere bzw. hintere Umfangsausnehmung mit einem zugehörigen Zentrierabsatz 11 bzw. 12 angeordnet.

Die von den Lagerachsen 5a bzw. 5b abgewandten Ausnehmung mit dem Zentrierabsatz 11 nimmt das - am Flansch 10 anliegend - Rundmesser M1 bzw. M2 und einen mit einem Transportring 14 aus elastischem Material versehenen Tragring 15 auf. Die Befestigung der Rundmesser M1, M2 erfolgt durch Schrauben 16, die mit ihrem Gewinde in entsprechende Gewinde eines in der Ausnehmung mit dem Zentrierabsatz 12 angeordneten Halteringes 17a bzw. 17b eingreifen. Zur Befestigung des Tragringes 15 sind zusätzliche Schrauben 16' vorgesehen.

Der untere Haltering 17a ist mit einer Außenverzahnung 18 versehen und steht mit einem nicht dargestellten Antriebsrad im Eingriff.

Zwischen den beiden Lagerachsenteilen 5c, 7a bzw. 5d, 7b der Lagerachsen 5a, 5b ist jeweils ein Umfangsflansch 19 angeordnet. Bei der unteren Lagerachse 5a dient der Flansch unmittelbar als Anlage an das untere Gestellteil 2a. Bei der oberen Lagerachse 5b ist zwischen dem Flansch 19 und dem oberen Gestellteil 2b ein Federring 20 angeordnet, der die Lagerachse 5b und mit ihr das Rundmesser M2 axial in Richtung auf die untere Messeranordnung unter Vorspannung hält.

Die Lagerachsen 5a, 5b werden über an der Außenseite der Gestellteile 2a, 2b anliegende Deckelplatten 21a, 21b von Schrauben 22 in die Ausnehmungen 6a, 6b hineingezogen und dort gehalten. Dabei ergibt sich bei der unteren Messerlagerung durch die Anlage des Flansches 19 am Gestellteil 2a eine eindeutige axiale Lage.

Die obere Deckelplatte 21b liegt mit einer zentralen Anlagefläche 23 an der Stirnfläche der Lagerachse 5b und mit einer - radial gesehen - äußeren Anlagefläche 24 an dem oberen Gestellteil 2b an. Durch ein Verändern der axialen Abmessungen der Anlageflächen 23, 24 zueinander, läßt sich die axiale Lage der Lagerachse 5b und damit der Schnittspalt C zwischen den .beiden Rundmessern M1 und M2 einstellen.

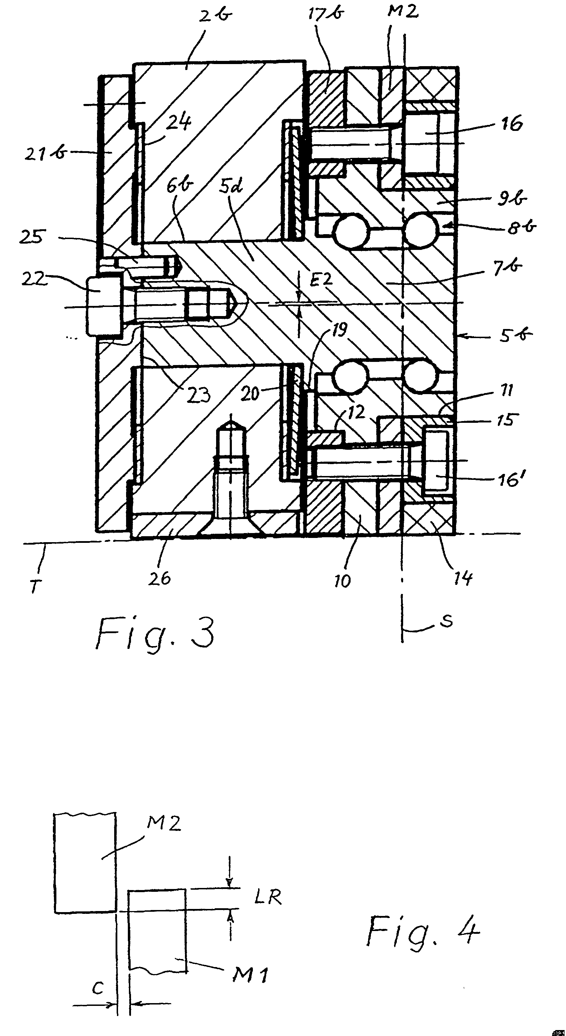

Die Deckelplatte 21b ist durch Stifte 25 verdrehfest mit der Lagerachse 5b verbunden. Durch Drehen der Deckelplatte 21b läßt sich die Lagerachse 5b entsprechend drehen und damit die Lage der Exzentrizität E2 verändern. So ist für den Schneidvorgang, wenn zu schneidendes Gut in der Transportebene T bei der in Fig. 1 dargestellten Ansicht von hinter der Bildebene in Richtung vor die Bildebene durch das Messerpaar M1/M2 geschickt wird, in der Regel eine radiale Überlappung LR eingestellt (vgl. Fig. 4), d.h. bei einem Blick in axialer Richtung überschneiden sich die Umfangslinien der beiden Rundmesser M1, M2.

Beim Aus- und Einbau mindestens eines Rundmessers M1 bzw. M2 wird mindestens eine Achse 5a bzw. 5b derart geschwenkt, daß die Exzentrizität der Achsenteile 7a bzw. 7b von der anderen Messerlagerung wegweist und eine Überlappung der Rundmesser M1 und M2 aufgehoben ist. Nunmehr kann entweder der Transportring 14 allein oder zusammen mit dem betreffenden Rundmesser am Tragring 9a bzw. 9b oder die gesamte Messerlagerung einschließlich Lagerachse 5a bzw. 5b ausgetauscht werden. Die in den Fig. 2 und 3 dargestellten Verschleißbleche 26 verhindern ein Verschleißen des Gestelles 2.

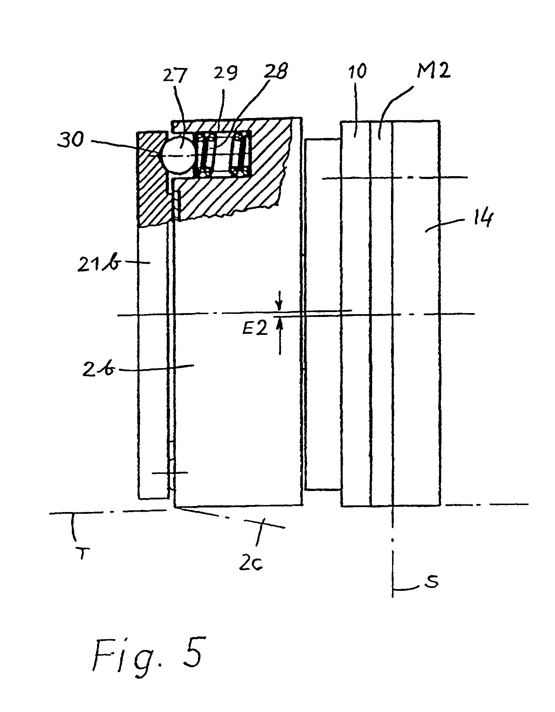

In Fig. 5 ist eine federbelastete Kugel 27 dargestellt, die sich - wie die sie belastende Feder 28 - in einer Ausnehmung 29 des oberen Gestellteiles 2b befindet. Die Deckelplatte 21b weist an entsprechenden Stellen zwei oder mehr kleine Ausnehmungen 30 zum teilweisen Eindringen bzw. Einrasten der Kugel 27 auf. Beim Drehen der Deckelplatte 21b können die unterste und oberste Position der Exzentrizität E2 und ggf. Zwischenstellungen beim Einrasten der Kugel 27 in die Ausnehmung 30 leicht gefunden werden.

### Beschreibung für folgenden Vertragsstaat: AT, BE, CH, ES, IT, PT, LI

Bei Rundmesserscheren zum Schneiden von Blechtafeln in Streifen und/oder von Streifen in Zuschnitte werden die Rundmesser entweder auf zwei Messerwellen (vgl. z.B. DE 40 05 271 C1) oder paarweise an einzeln verschiebbaren Halterungen (vgl. z.B. WO-A-94/00261, gemäß dem Oberbegriff des Anspruchs 1) angeordnet.

Die vorliegende Erfindung betrifft eine Anordnung der letztgenannten Art mit einem auf Führungsschienen längsverschiebbaren Gestell mit einem oberen und unteren Teil zur seperaten Lagerung je eines Rundmessers, wobei durch die einander zugeordneten Schneidkanten eine Schneidebene gegeben ist In der Praxis weisen die beiden Rundmesser eines Paares einen Schneidspalt auf. Der Begriff Schneidebene ist hier unter Vernachlässigung des Schneidspaltes verwendet worden.

Die aus der WO-A-94/00261 bekannte Messerhalterung weist eine große Vielzahl von Einzelteilen (zentrale Messerwelle, Zentrierstück für Transportring und Rundmesser, zwei Wälzlager, eine Schiebehülse mit Gewinde, geschlitzte Mutter, durch das Gestell durchgeführte Halterung für die Schiebehülse) auf. Rechnet man jedem Einzelteil eine bestimmte Toleranz zu, so kann sich durch die Addition der einzelnen Toleranzen eine erhebliche Abweichung ergeben bzw. umgekehrt ist für die Rundmesser eine bestimmte Toleranz vorgeschrieben, so müssen die Einzelteile eine sehr geringe Toleranz aufweisen, was einen hohen Fertigungsaufwand erforderlich macht. Die Rundmesser der bekannten Halterung stützen sich auf einem Teil der Welle ab, der sich außerhalb der Lagerung befindet, wodurch sich eine große Kraglänge ergibt, die zu einer Verkippungsgefahr führt und damit das Schneidergebnis beeinträchtigt. Zur Demontage der Messer muß wegen der Überlappung der Messer zunächst ein Zentrierstück ausgebaut werden, was den Aufwand beim Montieren bzw. Demontieren zusätzlich erhöht.

Der Erfindung liegt die Aufgabe zugrunde, die erforderliche Anzahl der Teile der Messerhaltung zu reduzieren, die Kippsicherheit zu erhöhen und den Aufwand für Fertigung und Montage zu reduzieren.

Diese Aufgabe wird erfindungsgemäß dadurch gelöst, daß jedes Messer über ein Drehlager auf einer in einer Ausnehmung des Gestells schwenkbar und feststellbar gehaltenen Achse abgestützt ist, daß die Schneidebene jedes der Drehlager durchdringt und daß die Rotationsachse der Achse des Drehlagers gegenüber der Rotationsachse des im Gestell gehaltenen Teils der Achse eine Exzentrizität aufweist.

Eine in einem Gestell festhaltbare Achse weist eine hohe Belastbarkeit auf. Wenn die Schneidebene die Drehlager durchdringt, bedeutet dies, daß die Drehlager im Bereich der Krafteinwirkung angeordnet sind und damit die Verkippungsgefahr der Rundmesser verhindert wird. Durch die vorgesehene Exzentrizität des Drehlagers gegenüber den im Gestell befindlichen Teil der Achse ist es durch Verschwenken der Achse in einfacher Weise möglich, die Rundmesser aus dem Bereich der Überlappung herauszuschwenken und zu demontieren.

Vorteilhafte Weiterbilungen der Erfindung sind in den Unteransprüchen beschrieben. So wird durch die Begrenzung des im Gestell befindlichen Teils der Achse durch einen Absatz oder Flansch in Richtung auf das Drehlager eine genaue axiale Position der Achse und damit des auf ihr gelagerten Messers gewährleistet.

Nach einer bevorzugten Ausführungsform wird die Achse über eine Deckelplatte in die Ausnehmung des Gestells eingezogen und festgestellt.

Um einen einwandfreien sicheren Betrieb zu gewährleisten, ist weiter vorgesehen, die Deckelplatte sowohl gegen die Achse als auch gegen das Gestell gegen Verdrehen zu sichern. Dabei kann die Drehsicherung der Deckelplatte gegenüber dem Gestell durch eine federbelastete Rasteinrichtung und gegenüber der Achse durch Zentrierstifte erfolgen.

Zur Einstellung des Schneidspaltes zwischen den beiden Rundmessem ist nach einer Weiterentwicklung der Erfindung vorgesehen, zwischen dem Drehlager und dem Gestell eine Federanordnung vorzusehen und die Feststellbarkeit der Achse mit einer axialen Einstellbarkeit zu kombinieren, wobei die axiale Einstellbarkeit bei einer bevorzugten Ausführungsform durch das axiale Maß zwischen einer zentrischen, zur Anlage an die Achse und einer zur Anlage an das Gestell vorgesehene Anlagefläche der Deckelplatte ermöglicht wird.

Eine besonders gedrungene Bauart der Messerlagerung ergibt sich, wenn die Drehlager unmittelbar durch einen Teil der im Gestell gehaltenen Achse und/oder einen das Rundmesser tragenden Ring gebildet ist. Bei vorgegenem Messerdurchmesser können die Achse und das Lager groß dimensioniert werden, wodurch sich eine hohe Belastbarkeit und Lebensdauer der Teile ergibt.

Das Rundmesser ist zur Anlage an einem Flansch des Lagerrings befestigt, wobei es durch einen Zentrierabsatz schnell in seine Position gebracht werden kann.

In der Regel ist der Transportring im Betriebseinsatz häufiger zu wechseln als das Rundmesser. Um diesem Umstand Rechnung zu tragen, ist weiter eine separate Montage und Demontage der Transportringe und ihre Befestigung durch zusätzliche Befestigungsmittel vorgesehen.

Ein vorteilhafter Einsatz der erfindungsgemäßen Messerhalterung ist insbesondere dann gegeben, wenn das obere und das untere Teil des Gestells und ein beide Teile in Transportrichtung des zu schneidenden Gutes verbindendes Verbindungsstück im wesentlichen S-förmig angeordnet sind. Ein Verschleiß des eigentlichen Gestells wird schließlich dadurch verhindert, daß seine der Transportebene des zu schneidenden Gutes zugewandten Flächen mit Verschleißplatten versehen sind.

Ein Ausführungsbeispiel der Erfindung ist in der Zeichnung dargestellt und wird im folgenden näher erläutert. Es zeigen
- **Fig. 1**: eine Rundmesserhalterung in einer Seitenansicht entgegen der Transportrichtung des zu schneidenden Guts, insbes. eines Blechs,
- **Fig. 2**: die Rundmesserhalterung in einem Längsschnitt durch die Messerachsen,
- **Fig. 3**: den oberen Teil der Rundmesserhalterung in einem Längsschnitt,
- **Fig. 4**: die Position der Rundmesser zueinander in einer auszugsweisen Darstellung und
- **Fig. 5**: den oberen Teil der Messerhalterung in abgewandelter Form in einer teilweise geschnittenen Seitenansicht

In Fig. 1 ist eine von mehreren auf einer Führungsschienenanordnung längsverschieblichen und festsetzbaren Rundmesserhalterungen 1 in der Seitenansicht dargestellt. Die Halterung 1 weist ein oberes, in etwa S-förmiges Gestell 2 auf, das auf einem Schlitten 3 befestigt ist, der wiederum auf Führungsschienen 4 gleitbar geführt ist.

Im unteren Teil 2a des Gestells 2 ist ein auch als Ringmesser bezeichnetes ringförmiges Rundmesser M1 an der linken Seite gelagert und oberen Teil 2b ist ein zweites Rundmesser M2 auf der rechten Seite gelagert, wobei die jeweils von dem anderen Gestellteil 2a bzw. 2b abgewandten Stirnflächen der Rundmesser M1, M2 im wesentlichen in der gleichen Ebene, der Schneidebene S, liegen.

Zur Lagerung der Rundmesser M1, M2 sind zapfenförmige Lagerachsen 5a, 5b vorgesehen, die mit einem ersten Teil 5c bzw. 5d in entsprechende Ausnehmungen 6a, 6b der Gestellteile 2a bzw. 2b eingesetzt sind und - in axialer Richtung gesehen - jeweils auf das andere Gestellteil 2b bzw. 2a hinausragen. Die Lagerachsen 5a, 5b sind an ihren aus dem jeweiligen Gestellteil 2a bzw. 2b hervorstehenden Teil 7a, 7b jeweils als Innenteil eines Wälzlagers 8a, 8b ausgebildet. Dabei weisen die Mittelachse der Wälzlagerteile 7a, 7b und die Rotationsachse der zapfenförmigen Lagerachsteile 5c bzw. 5d zueinander eine Exzentrizität E1 bzw. E2 auf.

Die Lagerachsen 5a, 5b sind in den Ausnehmungen 6a, 6b der Gestellteile 2a, 2b dreh- bzw schwenkbar gelagert, so daß die Mittel- bzw. Rotationsachse der Wälzlagerteile 7a, 7b - in der Stimansicht gesehen - gegenüber der Rotationsachse der Lagerachse 5a, 5b nach oben, nach unten, nach rechts, nach links und in alle Zwischenstellungen gebracht werden kann.

Die Wälzlager 8a, 8b weisen jeweils einen äußeren Trag- oder Lagerring 9a bzw. 9b mit einem Flansch 10 auf. Zu beiden Seiten des Flansches 10 ist eine vordere bzw. hintere Umfangsausnehmung mit einem zugehörigen Zentrierabsatz 11 bzw. 12 angeordnet.

Die von den Lagerachsen 5a bzw. 5b abgewandte Ausnehmung mit dem Zentrierabsatz 11 nimmt das - am Flansch 10 anliegend - Rundmesser M1 bzw. M2 und einen mit einem Transportring 14 aus elastischem Material versehenen Tragring 15 auf. Die Befestigung der Rundmesser M1, M2 erfolgt durch Schrauben 16, die mit ihrem Gewinde in entsprechende Gewinde eines in der Ausnehmung mit dem Zentrierabsatz 12 angeordneten Halteringes 17a bzw. 17b eingreifen. Zur Befestigung des Tragrings 15 sind zusätzliche Schrauben 16' vorgesehen.

Der untere Haltering 17a ist mit einer Außenverzahnung 18 versehen und steht mit einem nicht dargestellten Antriebsrad im Eingriff.

Zwischen den beiden Lagerachsenteilen 5c, 7a bzw. 5d, 7b der Lagerachsen 5a, 5b ist jeweils ein Umfangsflansch 19 angeordnet. Bei der unteren Lagerachse 5a dient der Flansch unmittelbar als Anlage an das untere Gestellteil 2a. Bei der oberen Lagerachse 5b ist zwischen dem Flansch 19 und dem oberen Gestellteil 2b ein Federring 20 angeordnet, der die Lagerachse 5b und mit ihr das Rundmesser M2 axial in Richtung auf die untere Messeranordnung unter Vorspannung hält.

Die Lagerachsen 5a, 5b werden über an der Außenseite der Gestellteile 2a, 2b anliegende Deckelplatten 21a, 21b von Schrauben 22 in die Ausnehmungen 6a, 6b hineingezogen und dort gehalten. Dabei ergibt sich bei der unteren Messerlagerung durch die Anlage des Flansches 19 am Gestellteil 2a eine eindeutige axiale Lage.

Die obere Deckelplatte 21 b liegt mit einer zentralen Anlagefläche 23 an der Stirnfläche der Lagerachse 5b und mit einer - radial gesehen - äußeren Anlagefläche 24 an dem oberen Gestellteil 2b an. Durch ein Verändern der axialen Abmessungen der Anlageflächen 23, 24 zueinander, läßt sich die axiale Lage der Lagerachse 5b und damit der Schnittspalt C zwischen den beiden Rundmessern M1 und M2 einstellen.

Die Deckelplatte 21 b ist durch Stifte 25 verdrehfest mit der Lagerachse 5b verbunden. Durch Drehen der Deckelplatte 21b läßt sich die Lagerachse 5b entsprechend drehen und damit die Lage der Exzentrizität E2 verändern. So ist für den Schneidvorgang, wenn zu schneidendes Gut in der Transportebene T bei der in Fig. 1 dargestellten Ansicht von hinter der Bildebene in Richtung vor die Bildebene durch das Messerpaar M1/M2 geschickt wird, in der Regel eine radiale Überlappung LR eingestellt (vgl. Fig. 4), d.h. bei einem Blick in axialer Richtung überschneiden sich die Umfangslinien der beiden Rundmesser M1, M2.

Beim Aus- und Einbau mindestens eines Rundmessers M1 bzw. M2 wird mindestens eine Achse 5a bzw. 5b derart geschwenkt, daß die Exzentrizität der Achsenteile 7a bzw. 7b von der anderen Messerlagerung wegweist und eine Überlappung der Rundmesser M1 und M2 aufgehoben ist. Nunmehr kann entweder der Transportring 14 allein oder zusammen mit dem betreffenden Rundmesser am Tragring 9a bzw. 9b oder die gesamte Messerlagerung einschließlich Lagerachse 5a bzw. 5b ausgetauscht werden. Die in den Fig. 2 und 3 dargestellten Verschleißbleche 26 verhindern ein Verschleißen des Gestells 2.

In Fig. 5 ist eine federbelastete Kugel 27 dargestellt, die sich - wie die sie belastende Feder 28 - in einer Ausnehmung 29 des oberen Gestellteils 2b befindet. Die Deckelplatte 21 b weist an entsprechenden Stellen zwei oder mehr kleine Ausnehmungen 30 zum teilweisen Eindringen bzw. Einrasten der Kugel 27 auf. Beim Drehen der Deckelplatte 21b können die unterste und oberste Position der Exzentrizität E2 und ggf. Zwischenstellungen beim Einrasten der Kugel 27 in die Ausnehmung 30 leicht gefunden werden.

## Patentansprüche (Patentansprüche für folgende(n) Vertragsstaat(en): DE, FR, GB, NL)

1. Messerhalterung (1) für ein Rundmesserpaar (M1, M2) mit einem auf Führungsschienen (4) längsverschiebbaren Gestell (2) mit einem oberen Teil (2b) und einem unteren Teil (2a) zur separaten Lagerung je eines Messers (M2 bzw. M1), wobei durch die einander zugeordneten Schneidkanten der Rundmesser eine Schneidebene (S) gegeben ist, jedes Rundmesser (M1, M2) auf einer in einer Ausnehmung (6a, 6b) des Gestelles (2a, 2b) feststellbar gehaltenen Achse (5a, 5b) abgestützt ist, wobei die Schneidebene (S) jedes der Drehlager (8a, 8b) durchdringt und die Rotationsachse des Drehlagers (8a, 8b) gegenüber der Rotationsachse des im Gestell (2a bzw. 2b) gehaltenen Teiles (5c, 5d) der Achse (5a, 5b) eine Exzentrizität (E1 bzw. E2) aufweist,
**dadurch gekennzeichnet,**
**daß** jedes Rundmesser (M1, M2) über ein Drehlager (8a, 8b) auf einer Achse schwenkbar und feststellbar abgestützt ist, so daß die Rotationsachse der Wälzlagerteile (7a, 7b) als Innenteil des Wälzlagers (8a, 8b) gegenüber der Rotationsachse der Lagerachse (5a, 5b) - in Stirnrichtung gesehen - nach oben, nach unten, nach rechts und nach links und in alle Zwischenstellungen gebracht werden kann.

2. Messerhalterung nach Anspruch 1, **dadurch gekennzeichnet, daß** das im Gestell (2a, 2b) befindliche Teil (5c, 5d) der Achse (5a, 5b) in Richtung auf das Drehlager (8a, 8b) durch einen Absatz (19) begrenzt ist.

3. Vorrichtung nach einem der Ansprüche 1 oder 2, **dadurch gekennzeichnet, daß** die Achse (5a, 5b) über eine Deckelplatte (21a bzw. 21b) in die Ausnehmung 6a, 6b) des Gestelles (2a, 2b) einziehbar und dort feststellbar ist.

4. Messerhalterung nach Anspruch 3, **dadurch gekennzeichnet, daß** die Deckelplatte (21a, 21b) gegenüber der Achse (5a, 5b) und gegenüber dem Gestell (2a, 2b) gegen Verdrehen gesichert ist.

5. Messerhalterung nach Anspruch 4, **dadurch gekennzeichnet, daß** die Verdrehsicherung der Deckelplatte (21b) durch eine Rasteinrichtung (27, 30) erfolgt.

6. Messerhalterung nach Anspruch 4 oder 5, **dadurch gekennzeichnet, daß** die Verdrehsicherung der Deckelplatte (21a, 21b) gegenüber der Lagerachse (5a, 5b) durch Paßstifte erfolgt.

7. Messerhalterung nach einem der vorangegangenen Ansprüche, **dadurch gekennzeichnet, daß** bei einer der Messeranordnungen (M2) zwischen dem Drehlager (8b) und dem Gestell (2b) eine Federanordnung (20) vorgesehen ist und daß die Feststellbarkeit der Achse (5b) im Gestell (2b) mit einer axialen Einstellbarkeit kombiniert ist.

8. Messerhalterung nach Anspruch 7, **dadurch gekennzeichnet, daß** die axiale Einstellbarkeit der Achse (5b) durch Verändern des axialen Maßes zwischen einer zentrischen, zur Anlage an der Achse (5b) vorgesehenen Anlagefläche (23) und einer zur Anlage an dem Gestell (2b) vorgesehenen Anlagefläche (24) der Deckelplatte (21b) gegeben ist.

9. Messerhalterung nach einem der vorangegangenen Ansprüche, **dadurch gekennzeichnet, daß** die Drehlager (8a, 8b) unmittelbar durch einen Teil (7a, 7b) der Achse (5a, 5b) und/oder einen das Rundmesser (M1, M2) tragenden Ring (9a, 9b) gebildet ist.

10. Messerhalterung nach Anspruch 9, **dadurch gekennzeichnet, daß** der das Messer (M1, M2) tragende Ring (9a bzw. 9b) mit einem Flansch (10) und einem Zentrieransatz (11) zur Anlage bzw. Aufnahme des Rundmessers (M1, M2) versehen ist.

11. Messerhalterung nach Anspruch 10, **dadurch gekennzeichnet, daß** ein jedem Rundmesser (M1, M2) zugeordneter Transportring (14) durch zusätzliche Befestigungsmittel (16') an der Messeraufnahme (9) befestigbar ist.

12. Messerhalterung nach einem der vorangegangenen Ansprüche, **dadurch gekennzeichnet, daß** das obere und das untere Teil (2b bzw. 2a) des Gestelles (2) und ein beide Teile in Transportrichtung des zu schneidenden Gutes verbindendes Verbindungsstück (2c) im wesentlichen S-förmig angeordnet sind.

13. Messerhalterung nach Anspruch 12, **dadurch gekennzeichnet, daß** die der Transportebene (T) des zu schneidenden Gutes zugewandten Flächen der Gestellteile (2a, 2b) mit Verschleißplatten (26) versehen sind.

## Patentansprüche (Patentansprüche für folgende(n) Vertragsstaat(en): AT, BE, CH, ES, IT, PT, LI)

1. Messerhalterung (1) für ein Rundmesserpaar (M1, M2) mit einem auf Führungsschienen (4) längsverschiebbaren Gestell (2) mit einem oberen Teil (2b) und einem unteren Teil (2a) zur separaten Lagerung je eines Messers (M2 bzw. M1), wobei durch die einander zugeordneten Schneidkanten der Rundmesser eine Schneidebene (S) gegeben ist,
**dadurch gekennzeichnet,**
das jedes Rundmesser (M1, M2) über ein Drehlager (8a, 8b) auf einer in einer Ausnehmung (6a, 6b) des Gestelles (2a, 2b) schwenkbar und feststellbar gehaltenen Achse (5a, 5b) abgestützt ist, daß die Schneidebene (S) jedes der Drehlager (8a, 8b) durchdringt und daß die Rotationsachse des Drehlagers (8a, 8b) gegenüber der Rotatsionsachse des im Gestell (2a bzw. 2b) gehaltenen Teiles (5c, 5d) er Achse (5a, 5b) eine Exzentrizität (E1 bzw. E2) aufweist.

2. Messerhalterung nach Anspruch 1, **dadurch gekennzeichnet, daß** das im Gestell (2a, 2b) befindliche Teil (5c, 5d) der Achse (5a, 5b) in Richtung auf das Drehlager (8a, 8b) durch einen Absatz (19) begrenzt ist.

3. Vorrichtung nach einem der Ansprüche 1 oder 2, **dadurch gekennzeichnet, daß** die Achse 5a, 5b) über eine Deckelplatte (21a bzw. 21b) in die Ausnehmung (6a, 6b) des Gestelles (2a, 2b) einziehbar und dort feststellbar ist.

4. Messerhalterung nach Anspruch 3, **dadurch gekennzeichnet, daß** die Deckelplatte (21a, 21b) gegenüber der Achse (5a, 5b) und gegenüber dem Gestell (2a, 2b) gegen Verdrehen gesichert ist.

5. Messerhalterung nach Anspruch 4, **dadurch gekennzeichnet, daß** die Verdrehsicherung der Deckelplatte (21b) durch eine Rasteinrichtung (27, 30) erfolgt.

6. Messerhalterung nach Anspruch 4 oder 5, **dadurch gekennzeichnet, daß** die Verdrehsicherung der Deckelplatte (21a, 21b) gegenüber der Lagerachse (5a, 5b) durch Paßstifte erfolgt.

7. Messerhalterung nach einem der vorangegangenen Ansprüche, **dadurch gekennzeichnet, daß** bei einer der Messeranordnungen (M2) zwischen dem Drehlager (8b) und dem Gestell (2b) eine Federanordnung (20) vorgesehen ist und daß die Feststellbarkeit der Achse (5b) im Gestell (2b) mit einer axialen Einstellbarkeit kombiniert ist.

8. Messerhalterung nach Anspruch 7, **dadurch gekennzeichnet, daß** die axiale Einstellbarkeit der Achse (5b) durch Verändern des axialen Maßes zwischen einer zentrischen, zur Anlage an der Achse (5b) vorgesehenen Anlagefläche (23) und einer zur Anlage an dem Gestell (2b) vorgesehenen Anlagefläche (24) der Deckelplatte (21b) gegeben ist.

9. Messerhalterung nach einem der vorangegangenen Ansprüche, **dadurch gekennzeichnet, daß** die Drehlager (8a, 8b) unmittelbar durch einen Teil (7a, 7b) der Achse (5a, 5b) und/oder einen das Rundmesser (M1, M2) tragenden Ring (9a, 9b) gebildet ist.

10. Messerhalterung nach Anspruch 9, **dadurch gekennzeichnet, daß** der das Messer (M1, M2) tragende Ring (9a bzw. 9b) mit einem Flansch (10) und einem Zentrieransatz (11) zur Anlage bzw. Aufnahme des Rundmessers (M1, M2) versehen ist.

11. Messerhalterung nach Anspruch 10, **dadurch gekennzeichnet, daß** ein jedem Rundmesser (M1, M2) zugeordneter Transportring (14) durch zusätzliche Befestigungsmittel (16') an der Messeraufnahme (9) befestigbar ist.

12. Messerhalterung nach einem der vorangegangenen Ansprüche, **dadurch gekennzeichnet, daß** das obere und das untere Teil (2b bzw. 2a) des Gestelles (2) und ein beide Teile in Transportrichtung des zu schneidenden Gutes verbindendes Verbindungsstück (2c) im wesentlichen S-förmig angeordnet sind.

13. Messerhalterung nach Anspruch 12, **dadurch gekennzeichnet, daß** die der Transportebene (T) des zu schneidenden Gutes zugewandten Flächen der Gestellteile (2a, 2b) mit Verschleißplatten (26) versehen sind.

## Claims (Claims for the following Contracting State(s): DE, FR, GB, NL)

1. Cutter holder unit (1) for a pair of rotary cutters (M1, M2) with a frame (2) displaceable in longitudinal direction on guide rails (4), with an upper part (2b) and a lower part (2a) for separate bearing of one cutter each (M2, respectively M1), wherein the cutting edges of the rotary cutters oriented towards each other form a cutting plane (S), each rotary cutter (M1, M2) being supported by a shaft (5a, 5b) which can be securely mounted in a recess (6a, 6b) of said frame (2a, 2b), wherein the cutting plane (S) penetrates each of the rotary bearings (8a, 8b) and the rotary axis of the rotary bearing (8a, 8b) comprises an eccentricity (E1, respectively E2) relative to the rotary axis of the part (5c, 5d) of the shaft (5a, 5b) held by the frame (2a, respectively 2b),
**characterized in that**
each rotary cutter (M1, M2) is supported to pivot and be immobilized on an axis via a rotary bearing (8a, 8b) so that the rotary axis of the anti-friction bearing parts (7a, 7b), as inner part of the anti-friction bearing (8a, 8b), may be brought upwards, downwards, towards the right, towards the left and into all intermediate positions relative to the rotary axis of the bearing shafts (5a, 5b) - as viewed from the front.

2. Cutter holder unit according to claim 1, **characterized in that** the part (5c, 5d) of the shaft (5a, 5b) which rests in the frame (2a, 2b) is limited in the direction of the rotary bearing (8a, 8b) by a step (19).

3. Device according to one of claims 1 or 2, **characterized in that** the shaft (5a, 5b) can be retracted and immobilized in the recess (6a, 6b) of the frame (2a, 2b) via a cover plate (21a, respectively 21b).

4. Cutter holder according to claim 3, **characterized in that** the cover plate (21a, 21b) is secured against rotation relative to shaft (5a, 5b) and frame (2a, 2b).

5. Cutter holder unit according to claim 4, **characterized in that** the cover plate (21 b) is secured against rotation by a snap-in device (27, 30).

6. Cutter holder unit according to claim 4 or 5 **characterized in that** the cover plate (21a, 21b) is secured by fitting pins against rotation relative to the bearing shaft (5a, 5b).

7. Cutter holder unit according to one of the above claims, **characterized in that** for one of the cutter arrangements (M2), between the rotary bearing (8b) and the frame (2b) there is a spring arrangement (20) and that the immobilization of the shaft (5b) in the frame (2b) is combined with an axial adjustment.

8. Cutter holder according to claim 7, **characterized in that** the axial adjustment of the shaft (5b) is granted by variation of the axial dimensions between a central engagement surface (23), provided to abut the shaft (5b), and an engagement surface (24) of the cover plate (21b), provided to abut on the frame (2b).

9. Cutter holder unit according to one of the above claims, **characterized in that** the rotary bearings (8a, 8b) are directly formed by a part (7a, 7b) of the shaft (5a, 5b) and/or a ring (9a, 9b) which carries the rotary cutter (M1, M2).

10. Cutter holder unit according to claim 9, **characterized in that** the ring (9a, respectively 9b) carrying the cutter (M1, M2) is provided with a flange (10) and a centering step (11) to engage with or receive the rotary cutter (M1, M2).

11. Cutter holder unit according to claim 10, **characterized in that** a transport ring (14) for each rotary cutter (M1, M2) can be secured to the cutter support (9) by additional fixing elements (16').

12. Cutter holder unit according to one of the above claims, **characterized in that** the upper and lower part (2a, respectively 2b) of the frame (2) and a connecting piece (2c) linking both parts in conveying direction of the workpiece to be cut are essentially arranged in the form of an S.

13. Cutter holder according to claim 12, **characterized in that** for the faces of the frame parts (2a, 2b) oriented towards the conveying plane (T) of the workpiece to be cut are provided with wear plates (26).

## Claims (Claims for the following Contracting State(s): AT, BE, CH, ES, IT, PT, LI)

1. Cutter holder unit (1) for a pair of rotary cutters (M1, M2) with a frame (2) displaceable in longitudinal direction on guide rails (4), with an upper part (2b) and a lower part (2a) for separate bearing of one cutter each (M2, respectively M1), wherein the cutting edges of the rotary cutters oriented towards each other form a cutting plane (S),
**characterized in that**
each rotary cutter (M1, M2) is supported to pivot and be immobilized on an axis via a rotary bearing (8a, 8b) that the cutting plane (S) penetrates each of the rotary bearings (8a, 8b) and the rotary axis of the rotary bearing (8a, 8b) comprises an eccentricity (E1, respectively E2) relative to the rotary axis of the part (5c, 5d) held by the frame (2a, respectively 2b).

2. Cutter holder unit according to claim 1, **characterized in that** the part (5c, 5d) of the shaft (5a, 5b) which rests in the frame (2a, 2b) is limited in the direction of the rotary bearing (8a, 8b) by a step (19).

3. Device according to one of claims 1 or 2, **characterized in that** the shaft (5a, 5b) can be retracted and immobilized in the recess (6a, 6b) of the frame (2a, 2b) via a cover plate (21a, respectively 21b).

4. Cutter holder according to claim 3, **characterized in that** the cover plate (21a, 21b) is secured against rotation relative to shaft (5a, 5b) and frame (2a, 2b).

5. Cutter holder unit according to claim 4, **characterized in that** the cover plate (21b) is secured against rotation by a snap-in device (27, 30).

6. Cutter holder unit according to claim 4 or 5, **characterized in that** the cover plate (21a, 21b) is secured by fitting pins against rotation relative to the bearing shaft (5a, 5b).

7. Cutter holder unit according to one of the above claims, **characterized in that** for one of the cutter arrangements (M2), between the rotary bearing (8b) and the frame (2b) there is a spring arrangement (20) and that the immobilization of the shaft (5b) in the frame (2b) is combined with an axial adjustment.

8. Cutter holder according to claim 7, **characterized in that** the axial adjustment of the shaft (5b) is granted by variation of the axial dimensions between a central engagement surface (23), provided to abut the shaft (5b), and an engagement surface (24) of the cover plate (21b), provided to abut on the frame (2b).

9. Cutter holder unit according to one of the above claims, **characterized in that** the rotary bearings (8a, 8b) are directly formed by a part (7a, 7b) of the shaft (5a, 5b) and/or a ring (9a, 9b) which carries the rotary cutter (M1, M2).

10. Cutter holder unit according to claim 9, **characterized in that** the ring (9a, respectively 9b) carrying the cutter (M1, M2) is provided with a flange (10) and a centering step (11) to engage with or receive the rotary cutter (M1, M2).

11. Cutter holder unit according to claim 10, **characterized in that** a transport ring (14) for each rotary cutter (M1, M2) can be secured to the cutter support (9) by additional fixing elements (16').

12. Cutter holder unit according to one of the above claims, **characterized in that** the upper and lower part (2a, respectively 2b) of the frame (2) and a connecting piece (2c) linking both parts in conveying direction of the workpiece to be cut are essentially arranged in the form of an S.

13. Cutter holder according to claim 12, **characterized in that** for the faces of the frame parts (2a, 2b) oriented towards the conveying plane (T) of the workpiece to be cut are provided with wear plates (26).

## Revendications (Revendications pour l'(les) Etat(s) contractant(s) suivant(s): DE, FR, GB, NL)

1. Support de couteaux (1) pour une paire de couteaux circulaires (M1, M2) avec un bâti (2) qui peut être déplacé longitudinalement sur des rails de guidage (4) et qui comprend une partie supérieure (2b) et une partie inférieure (2a) pour le logement séparé de respectivement un couteau (M2 ou bien M1), un plan de coupe (S) étant donné par les arêtes coupantes des couteaux circulaires, associées l'une à l'autre, chacun des couteaux circulaires (M1, M2) étant appuyé sur un axe (5a, 5b) tenu dans un évidement (6a, 6b) du bâti (2a, 2b) de manière à pouvoir être arrêté, ledit plan de coupe (S) traversant chacun des coussinets de pivotement (8a, 8b) et l'axe de rotation du coussinet de pivotement (8a, 8b) présentant une excentricité (E1 ou bien E2) par rapport à l'axe de rotation de la partie (5c, 5d) de l'axe (5a, 5b), qui est tenue dans le bâti (2a, 2b),
**caractérisé par le fait**
**que** chaque couteau circulaire (M1, M2) est appuyé par un coussinet de pivotement (8a, 8b) sur un axe de manière à pouvoir pivoter et à pouvoir être arrêté, de sorte que l'axe de rotation des parties de palier à roulement (7a, 7b) en tant que partie intérieure du coussinet de pivotement (8a, 8b) peut être déplacé par rapport à l'axe de rotation de l'axe de logement (5a, 5b) - vu dans la direction frontale - vers le haut, vers le bas, à droite et à gauche et dans toute position intermédiaire.

2. Support de couteaux selon la revendication 1, **caractérisé par le fait que** la partie (5c, 5d) de l'axe (5a, 5b), qui se trouve dans le bâti (2a, 2b) est limitée vers le coussinet de pivotement (8a, 8b) par un gradin (19).

3. Dispositif selon l'une des revendications 1 ou 2, **caractérisé par le fait que** l'axe (5a, 5b) peut être rétracté par un couvercle en forme de plaque (21a ou bien 21b) dans l'évidement (6a, 6b) du bâti (2a, 2b) et peut y être arrêté.

4. Support de couteaux selon la revendication 3, **caractérisé par le fait que** le couvercle en forme de plaque (21a, 21b) est assuré contre une rotation par rapport à l'axe (5a, 5b) et par rapport au bâti (2a, 2b).

5. Support de couteaux selon la revendication 4, **caractérisé par le fait que** le couvercle en forme de plaque (21b) est assuré contre une rotation par l'intermédiaire d'un dispositif à encliquetage (27, 30).

6. Support de couteaux selon la revendication 4 ou 5, **caractérisé par le fait que** le couvercle en forme de plaque (21a, 21b) est assuré par des goupilles d'ajustage contre une rotation par rapport à l'axe de logement (5a, 5b).

7. Support de couteaux selon l'une des revendications précédentes, **caractérisé par le fait que**, dans l'une des dispositions de couteau (M2), une disposition de ressort (20) est prévue entre le coussinet de pivotement (8b) et le bâti (2b), et que la possibilité d'arrêter l'axe (5b) dans le bâti (2b) est combinée avec la possibilité d'un réglage axial.

8. Support de couteaux selon la revendication 7, **caractérisé par le fait que** la possibilité de réglage axial de l'axe (5b) est donnée par la variation de la mesure axiale entre une surface d'appui centrique (23) prévue pour l'appui sur l'axe (5b) et une surface d'appui (24) du couvercle en forme de plaque (21b), qui est prévue pour l'appui sur le bâti (2b).

9. Support de couteaux selon l'une des revendications précédentes, **caractérisé par le fait que** les coussinets de pivotement (8a, 8b) sont formés directement par une partie (7a, 7b) de l'axe (5a, 5b) et/ou par un anneau (9a, 9b) portant le couteau circulaire (M1, M2).

10. Support de couteaux selon la revendication 9, **caractérisé par le fait que** ledit anneau (9a ou bien 9b) portant le couteau (M1, M2) est pourvu d'une bride (10) et d'un rebord de centrage (11) destiné à l'appui ou bien à la réception du couteau circulaire (M1, M2).

11. Support de couteaux selon la revendication 10, **caractérisé par le fait qu'**un anneau de transport (14) associé à chacun des couteaux circulaires (M1, M2) peut être fixé par des moyens supplémentaires de fixation (16') sur le logement de couteau (9).

12. Support de couteaux selon l'une des revendications précédentes, **caractérisé par le fait que** les parties supérieure et inférieure (2b ou bien 2a) du bâti (2) ainsi qu'une pièce de jonction (2c) reliant les deux parties dans la direction de transport de la pièce à couper sont disposées pour l'essentiel en forme de S.

13. Support de couteaux selon la revendication 12, **caractérisé par le fait que** les surfaces des parties (2a, 2b) du bâti, qui montrent vers le plan de transport (T) de la pièce à couper, sont pourvues de plaques d'usure (26).

## Revendications (Revendications pour l'(les) Etat(s) contractant(s) suivant(s): AT, BE, CH, ES, IT, PT, LI)

1. Support de couteaux (1) pour une paire de couteaux circulaires (M1, M2) avec un bâti (2) qui peut être déplacé longitudinalement sur des rails de guidage (4) et qui comprend une partie supérieure (2b) et une partie inférieure (2a) pour le logement séparé de respectivement un couteau (M2 ou bien M1), un plan de coupe (S) étant donné par les arêtes coupantes des couteaux circulaires, associées l'une à l'autre,
**caractérisé par le fait**
**que** chaque couteau circulaire (M1, M2) est appuyé par un coussinet de pivotement (8a, 8b) sur un axe (5a, 5b) tenu dans un évidement (6a, 6b) du bâti (2a, 2b) de manière à pouvoir pivoter et à pouvoir être arrêté, que le plan de coupe (S) traverse chacun des coussinets de pivotement (8a, 8b) et que l'axe de rotation du coussinet de pivotement (8a, 8b) présente une excentricité (E1 ou bien E2) par rapport à l'axe de rotation de la partie (5c, 5d) de l'axe (5a, 5b), qui est tenue dans le bâti (2a, 2b).

2. Support de couteaux selon la revendication 1, **caractérisé par le fait que** la partie (5c, 5d) de l'axe (5a, 5b), qui se trouve dans le bâti (2a, 2b) est limitée vers le coussinet de pivotement (8a, 8b) par un gradin (19).

3. Dispositif selon l'une des revendications 1 ou 2, **caractérisé par le fait que** l'axe (5a, 5b) peut être rétracté par un couvercle en forme de plaque (21a ou bien 21b) dans l'évidement (6a, 6b) du bâti (2a, 2b) et peut y être arrêté.

4. Support de couteaux selon la revendication 3, **caractérisé par le fait que** le couvercle en forme de plaque (21a, 21b) est assuré contre une rotation par rapport à l'axe (5a, 5b) et par rapport au bâti (2a, 2b).

5. Support de couteaux selon la revendication 4, **caractérisé par le fait que** le couvercle en forme de plaque (21b) est assuré contre une rotation par l'intermédiaire d'un dispositif à encliquetage (27, 30).

6. Support de couteaux selon la revendication 4 ou 5, **caractérisé par le fait que** le couvercle en forme de plaque (21a, 21b) est assuré par des goupilles d'ajustage contre une rotation par rapport à l'axe de logement (5a, 5b).

7. Support de couteaux selon rune des revendications précédentes, **caractérisé par le fait que**, dans tune des dispositions de couteau (M2), une disposition de ressort (20) est prévue entre le coussinet de pivotement (8b) et le bâti (2b), et que la possibilité d'arrêter l'axe (5b) dans le bâti (2b) est combinée avec la possibilité d'un réglage axial.

8. Support de couteaux selon la revendication 7, **caractérisé par le fait que** la possibilité de réglage axial de l'axe (5b) est donnée par la variation de la mesure axiale entre une surface d'appui centrique (23) prévue pour l'appui sur l'axe (5b) et une surface d'appui (24) du couvercle en forme de plaque (21b), qui est prévue pour l'appui sur le bâti (2b).

9. Support de couteaux selon l'une des revendications précédentes, **caractérisé par le fait que** les coussinets de pivotement (8a, 8b) sont formés directement par une partie (7a, 7b) de l'axe (5a, 5b) et/ou par un anneau (9a, 9b) portant le couteau circulaire (M1, M2).

10. Support de couteaux selon la revendication 9, **caractérisé par le fait que** ledit anneau (9a ou bien 9b) portant le couteau (M1, M2) est pourvu dune bride (10) et d'un rebord de centrage (11) destiné à l'appui ou bien à la réception du couteau circulaire (M1, M2).

11. Support de couteaux selon la revendication 10, **caractérisé par le fait qu'**un anneau de transport (14) associé à chacun des couteaux circulaires (M1, M2) peut être fixé par des moyens supplémentaires de fixation (16') sur le logement de couteau (9).

12. Support de couteaux selon l'une des revendications précédentes, **caractérisé par le fait que** les parties supérieure et inférieure (2b ou bien 2a) du bâti (2) ainsi qu'une pièce de jonction (2c) reliant les deux parties dans la direction de transport de la pièce à couper sont disposées pour l'essentiel en forme de S.

13. Support de couteaux selon la revendication 12, **caractérisé par le fait que** les surfaces des parties (2a, 2b) du bâti, qui montrent vers le plan de transport (T) de la pièce à couper, sont pourvues de plaques d'usure (26).
